# EUROPÄISCHE PATENTSCHRIFT

(11) **EP 3 536 535 B1**
(45) Veröffentlichungstag und Bekanntmachung des Hinweises auf die Patenterteilung: **29.06.2022**
(21) Anmeldenummer: 19158470.5
(22) Anmeldetag: 21.02.2019
(51) Int. Cl.: H02M 1/42, H02M 3/335, B60L 1/00, H02M 7/79, B60L 58/20, B60L 53/10, B60L 53/12, B60L 53/22, B60L 53/14

(54) **LADEEINRICHTUNG FÜR EIN KRAFTFAHRZEUG**
CHARGER FOR A MOTOR VEHICLE
DISPOSITIF DE CHARGE POUR VÉHICULE AUTOMOBILE

(30) Priorität: 06.03.2018 DE 102018203263
(43) Veröffentlichungstag der Anmeldung: 11.09.2019
(73) Patentinhaber: AUDI AG, 85045 Ingolstadt (DE)
(72) Erfinder: Ruppert, Daniel, 85101 Lenting (DE)

(56) Entgegenhaltungen:
- EP-A1- 2 567 856
- DE-A1-102009 007 737
- DE-A1-102014 208 326
- US-A1- 2012 068 663
- US-A1- 2015 372 499
- US-A1- 2016 016 479
- US-B2- 7 796 410
- SAE EV CHARGING SYSTEMS COMMITTEE: "J1772: SAE Electric Vehicle Conductive Charge Coupler", INTERNET CITATION, 1 October 1996 (1996-10-01), pages 1-30, XP002758454, Retrieved from the Internet: URL:http://www.arb.ca.gov/msprog/zevprog/s takeholders/infrastructure/finalsaej1772.d oc [retrieved on 2016-05-02]

## Beschreibung

### BESCHREIBUNG:

Die Erfindung betrifft eine Ladeeinrichtung System bestehend aus einer Ladeeinrichtung und einem Fahrzeugenergiewandler für ein Kraftfahrzeug, wobei die Ladeeinrichtung mit einem Ladeanschluss zum energietechnischen Koppeln mit einer kraftfahrzeugexternen Ladestation, einem Hochvoltanschluss zum elektrischen Anschließen der Ladeeinrichtung an ein Hochvoltbordnetz des Kraftfahrzeugs und einem mit dem Ladeanschluss und dem Hochvoltanschluss elektrisch gekoppelten Ladeeinrichtungsenergiewandler, wobei der Ladeeinrichtungsenergiewandler zum Wandeln von elektrischer Energie zwischen dem Ladeanschluss und dem Hochvoltanschluss eine elektrische Induktivität als elektrischen Energiespeicher aufweist, die zumindest teilweise als elektronische Hauptspule ausgebildet ist. Die Erfindung betrifft ferner ein Kraftfahrzeug mit einem Hochvoltbordnetz, einem Niedervoltbordnetz, einer Ladeeinrichtung, die einen an das Hochvoltbordnetz angeschlossenen Hochvoltanschluss und einen Ladeanschluss zum energietechnischen Koppeln mit einer kraftfahrzeugexternen Ladestation aufweist, sowie einen zwischen dem Hochvoltbordnetz und dem Niedervoltbordnetz angeschlossenen Fahrzeugenergiewandler zum elektrischen Koppeln des Hochvoltbordnetzes und des Niedervoltbordnetzes.

Ladeeinrichtungen der gattungsgemäßen Art sowie auch Kraftfahrzeuge mit derartigen Ladeeinrichtungen sind im Stand der Technik umfänglich bekannt. Die Ladeeinrichtungen dienen bei Kraftfahrzeugen insbesondere dazu, einem Bordnetz des Kraftfahrzeugs, beispielsweise dem Hochvoltbordnetz oder dergleichen, elektrische Energie zuführen zu können. Dies betrifft insbesondere Kraftfahrzeuge, die elektrisch antreibbare Kraftfahrzeuge sind und die eine elektrische Antriebseinrichtung aufweisen, die dem bestimmungsgemäßen Fahrbetrieb dient. Weist das Kraftfahrzeug ausschließlich die elektrische Antriebseinrichtung auf, so handelt es sich um ein Elektrofahrzeug. Ist darüber hinaus ergänzend eine andere Antriebseinrichtung, beispielsweise eine Verbrennungskraftmaschine oder dergleichen vorgesehen, handelt es sich dabei um ein Hybridfahrzeug.

Insbesondere bei elektrisch antreibbaren Kraftfahrzeugen ist in der Regel ein Hochvoltbordnetz vorgesehen, dass der Versorgung der elektrischen Antriebseinrichtung mit elektrischer Energie während des bestimmungsgemäßen Fahrbetriebs dient. Zu diesem Zweck umfasst das Hochvoltbordnetz einen elektrischen Energiespeicher, der üblicherweise als Akkumulator nach Art einer Hochvoltbatterie ausgebildet ist. Die Hochvoltbatterie ist zum Beispiel als Lithium-Ion-Akkumulator oder dergleichen ausgebildet. Darüber hinaus kann der elektrische Energiespeicher natürlich auch einen Kondensator sowie Kombinationsschaltungen mit Hochvoltbatterien und/oder dergleichen umfassen.

Im bestimmungsgemäßen Fahrbetrieb stellt der elektrische Energiespeicher die für den bestimmungsgemäßen Fahrbetrieb erforderliche elektrische Energie zur Verfügung. Während des bestimmungsgemäßen Fahrbetriebs wird der elektrische Energiespeicher also entladen. Es ist daher in regelmäßigen Abständen erforderlich, dem elektrischen Energiespeicher wieder elektrische Energie zuführen zu können. Für diesen Zweck ist die Ladeeinrichtung vorgesehen. Zum Zuführen von elektrischer Energie wird das Kraftfahrzeug in der Regel an einer kraftfahrzeugexternen Ladestation abgestellt und die Ladeeinrichtung mit dieser Ladestation energietechnisch gekoppelt. Die Ladestation selbst kann ihrerseits zum Bereitstellen von Energie mit einem öffentlichen Energieversorgungsnetz elektrisch gekoppelt sein. Darüber hinaus kann die Ladestation natürlich auch eigene Energiequellen umfassen, beispielsweise Solarzellen, Windgeneratoren, Brennstoffzellen, Kombinationen hiervon oder dergleichen.

Die energietechnische Kopplung der Ladeeinrichtung mit der kraftfahrzeugexternen Ladestation kann zum Beispiel mittels eines Ladekabels ralisiert sein, mittels welchem eine leitungsgebundene elektrische Energiekopplung erreicht werden kann. Darüber hinaus kann die energietechnische Kopplung natürlich auch drahtlos erfolgen, beispielsweise unter Nutzung eines magnetischen Wechselfeldes oder dergleichen. Eine solche Kopplung wird auch induktive Kopplung genannt.

Kraftfahrzeuge, die ein Hochvoltbordnetz aufweisen, weisen darüber hinaus in der Regel auch ein Niedervoltbordnetz auf. Hochvolt im Sinn dieser Offenbarung meint eine elektrische Gleichspannung die größer als etwa 60 V ist, vorzugsweise eine elektrische Gleichspannung, wie sie gemäß der Norm ECE R 100 definiert ist, oder dergleichen. Ein Bordnetz, dessen Bemessungsspannung kleiner als etwa 60 V ist, ist somit dann ein Niedervoltbordnetz.

Niedervoltbordnetze werden bei Kraftfahrzeugen üblicherweise dazu genutzt, elektrische Verbraucher kleinerer Leistung mit elektrischer Energie zu versorgen, zum Beispiel ein Autoradio, eine Heckscheibenheizung, ein Lüftungsgebläse, eine Sitzheizung, eine Fahrzeuginnenbeleuchtung, Fahrzeugscheinwerfer und/oder dergleichen. Im Vergleich zur elektrischen Antriebseinrichtung benötigen diese Verbraucher lediglich eine kleine elektrische Leistung, weshalb die Versorgung über das Niedervoltbordnetz vorteilhaft ist. Darüber hinaus sind im Bereich Niedervolt deutlich geringere Anforderungen hinsichtlich der elektrischen Sicherheit zu berücksichtigen, weshalb auch aus diesem Grund das Niedervoltbordnetz bei einem gattungsgemäßen Kraftfahrzeug vorteilhaft ist. Das Niedervoltbordnetz kann in der Regel einen eigenen elektrischen Energiespeicher, beispielsweise eine Fahrzeugbatterie oder dergleichen umfassen, die vorzugsweise ebenfalls als Akkumulator ausgebildet ist. Derartige elektrische Energiespeicher sind häufig als Blei-Säure-Akkumulatoren ausgebildet. Darüber hinaus können sie natürlich auch als Lithium-Ion-Akkumulatoren ausgebildet sein. Auch hier kann der elektrische Energiespeicher alternativ oder ergänzend einen oder mehrere Kondensatoren umfassen.

Im bestimmungsgemäßen Betrieb des Kraftfahrzeugs ist in der Regel vorgesehen, dass das Hochvoltbordnetz und das Niedervoltbordnetz mittels eines Fahrzeugenergiewandlers energietechnisch gekoppelt sind. Dadurch kann zwischen den beiden Bordnetzen elektrische Energie ausgetauscht werden. Der Fahrzeugenergiewandler ist typischerweise als DC/DC-Wandler ausgebildet. Er ist in der Regel zumindest dazu ausgelegt, elektrische Energie des Hochvoltbordnetzes für das Niedervoltbordnetz bereitzustellen. Somit ist ein unidirektionaler Betrieb gewährleistet. Vorzugsweise ist jedoch auch eine Energiewandlung in die Gegenrichtung ermöglicht, sodass der Fahrzeugenergiewandler eine bidirektionale Energiewandlung ermöglicht.

Während eines Ladebetriebs, bei dem das Kraftfahrzeug über die Ladeeinrichtung mit der Ladestation energietechnisch gekoppelt ist und von dieser Energie bezieht, ist in der Regel vorgesehen, das Niedervoltbordnetz aktiviert zu halten, sodass eine gewisse Funktionalität von elektrischen Einrichtungen des Niedervoltbordnetzes auch während des Ladebetriebs gewährleistet werden kann. Gleichwohl wird hierfür in der Regel lediglich eine vergleichsweise geringe elektrische Leistung benötigt. Der Fahrzeugenergiewandler ist dagegen in der Regel jedoch zum Bereitstellen einer vielfach größeren elektrischen Leistung ausgelegt, die beispielsweise um einen Faktor von etwa 10 oder mehr größer als eine erforderliche Gesamtleistung des Niedervoltbordnetzes während des Ladebetriebs sein kann. Dies führt dazu, dass der Fahrzeugenergiewandler aufgrund der in Bezug auf seine Bemessungsleistung geringen bereitzustellenden Leistung in einem ungünstigen Wandlungsmodus betrieben wird, sodass er einen ungünstigen Wirkungsgrad bereitstellt. Dies erweist sich für den Ladebetrieb insgesamt als nachteilig. Ein derartiges Kraftfahrzeug offenbart zum Beispiel die EP 2 631 105 A1. Darüber hinaus offenbaren zum Beispiel die DE 10 2014 201 581 A1 eine Bordnetztrennschaltung für Gleichspannungswandler und ein Verfahren zum Trennen eines Bordnetzes von einem Gleichspannungswandler sowie die DE 10 2010 026 130 A1 eine Anschlussvorrichtung und ein Verfahren. Ferner offenbart die DE 10 2014 208 326 A1 ein Ladesystem für Elektrofahrzeug und die DE 10 2009 007 737 A1 eine Energiewandlervorrichtung für ein Kraftfahrzeug und ein entsprechendes Ladegerät. Ferner offenbart US2012/068663 A1 eine Ladeeinrichtung und ein Fahrzeugenergiewandler.

Der Erfindung liegt somit die Aufgabe zugrunde, einen verbesserten Ladebetrieb bei einem Kraftfahrzeug, welches mit der Ladestation energietechnisch gekoppelt ist, zu ermöglichen.

Als Lösung werden mit der Erfindung eine System bestehend aus einer Ladeeinrichtung und einem Fahrzeugenergiewandler, und ein Kraftfahrzeug gemäß den unabhängigen Ansprüchen vorgeschlagen.

Vorteilhafte Weiterbildungen ergeben sich aus Merkmalen der abhängigen Ansprüche.

Bezüglich einer gattungsgemäßen Ladeeinrichtung wird vorgeschlagen, dass diese einen Niedervoltanschluss zum Anschließen an ein Niedervoltbordnetz des Kraftfahrzeugs sowie eine elektronische Hilfsspule aufweist, die magnetisch mit der Hauptspule und elektrisch mit dem Niedervoltanschluss gekoppelt ist und die ausgebildet ist, elektrische Energie für das Niedervoltbordnetz bereitzustellen.

Bezüglich eines gattungsgemäßen Kraftfahrzeugs wird vorgeschlagen, dass die Ladeeinrichtung gemäß der Erfindung ausgebildet ist und einen an das Niedervoltbordnetz angeschlossenen Niedervoltanschluss aufweist.

Die Erfindung basiert auf dem Gedanken, dass durch Vorsehen der Hilfsspule eine Energieversorgung des Niedervoltbordnetzes alternativ zum Fahrzeugenergiewandler erreicht werden kann, sodass der im ungünstigen Betriebsmodus während des Ladebetriebs betriebene Fahrzeugenergiewandler nicht benötigt wird. Dieser kann dann deaktiviert werden, sodass die hierdurch verursachte Verlustleistung weitgehend eingespart werden kann. Die Erfindung nutzt dabei den Vorteil, dass durch die Hilfsspule bereits eine hinsichtlich der elektrischen Spannung angepasste Hilfsspannung bereitgestellt werden kann, die dazu dienen kann, dem Niedervoltbordnetz elektrische Energie zuzuführen. Dadurch, dass diesbezüglich keine aufwändige DC/DC-Wandlung erforderlich zu sein braucht, kann auch der hiermit verbundene nachteilige ungünstige Wirkungsgrad des Fahrzeugenergiewandlers weitgehend vermieden werden. Durch die Hilfsspule kann nämlich die elektrische Spannung bereits in einer derart angepassten Größe bereitgestellt werden, dass sie vorzugsweise ohne weitere Transformation für das Niedervoltbordnetz genutzt werden kann. Dadurch ist es mit der Erfindung möglich, während des Ladebetriebs mit einem hohen Wirkungsgrad elektrische Energie für das Niedervoltbordnetz bereitzustellen, sodass der ungünstige Betrieb des Fahrzeugenergiewandlers reduziert, wenn nicht sogar vollständig vermieden werden kann. Vorzugsweise ist die Hilfsspule derart ausgelegt, dass sie die erforderliche Leistung des Niedervoltbordnetzes während des Ladebetriebs bereitzustellen vermag, sodass der Fahrzeugenergiewandler vollständig deaktiviert werden kann.

Die Erfindung nutzt dabei den Effekt, dass die Induktivität beim Ladeeinrichtungsenergiewandler ohnedies in der Regel vorhanden ist. Diese nutzt eine Hauptspule, die ein Magnetfeld bereitstellt, welches der Speicherung von Energie dient, sodass die gewünschte Energiewandlungsfunktion bereitgestellt werden kann. Da die Hauptspule in der Regel für eine große Wandlungsleistung ausgelegt sein muss, ist auch ein entsprechendes magnetisches Feld verfügbar. Durch magnetische Ankopplung der Hilfsspule kann diesem Magnetfeld ein vergleichsweise kleiner Energieanteil entnommen werden, der der Bereitstellung der elektrischen Leistung für das Niedervoltbordnetz dienen kann. Durch die Erfindung ist es also möglich, mit wenig zusätzlichem technischen Aufwand eine hocheffiziente Energieversorgung während des Ladebetriebs zu ermöglichen.

Das magnetische Koppeln kann zum Beispiel dadurch realisiert sein, dass die Hauptspule und die Hilfsspule in einer geeigneten Ausrichtung, beispielsweise in Längsrichtung, zueinander angeordnet sind, sodass der magnetische Fluss der Hauptspule zumindest teilweise auch die Hilfsspule durchdringen kann. Darüber hinaus besteht natürlich auch die Möglichkeit, dass die Hauptspule und die Hilfsspule konzentrisch zueinander angeordnet sind, beispielsweise indem die Hilfsspule koaxial zur Hauptspule in einem größeren Durchmesser als die Hauptspule angeordnet ist oder umgekehrt oder dergleichen. Die magnetische Kopplung kann auch zumindest teilweise unter Nutzung eines ferromagnetischen Werkstoffs hergestellt werden, mit dem zumindest ein Teil des magnetischen Flusses der Hauptspule in die Hilfsspule eingekoppelt werden kann. Zu diesem Zweck können entsprechende ferromagnetische Elemente, beispielsweise ein Joch oder dergleichen, vorgesehen sein.

Der Ladeanschluss der Ladeeinrichtung kann einen Steckverbinder umfassen, der es erlaubt, eine lösbare elektromechanische Kopplung zu einem Ladekabel herzustellen. Der Ladeanschluss kann aber auch eine elektrische Spule umfassen, die mit einer elektrischen Spule der Ladestation magnetisch gekoppelt werden kann, um auf diese Weise induktiv die energietechnische Kopplung herstellen zu können.

Insgesamt dürfte in der Regel ein Energiefluss von der Ladestation zur Ladeeinrichtung vorgesehen sein. Bei Bedarf kann jedoch auch vorgesehen sein, das ein entgegengesetzter Energiefluss ermöglicht wird, sodass vom Hochvoltbordnetz des Kraftfahrzeugs Energie zur Ladestation gefördert wird.

Die Ladeeinrichtung weist eine Detektoreinheit auf, die ausgebildet ist, das energietechnische Koppeln der Ladeeinrichtung mit der Ladestation zu detektieren und ein entsprechendes Ladesignal abzugeben. Diese Ausgestaltung hat den Vorteil, dass ein Signal zur Verfügung steht, welches dazu genutzt werden kann, den Fahrzeugenergiewandler entsprechend zu steuern. Dadurch, dass die Detektoreinheit die energietechnische Kopplung mit der Ladestation detektiert, kann erreicht werden, dass festgestellt wird, wann die Energieversorgung über den Fahrzeugenergiewandler nicht mehr benötigt wird. Deshalb kann das Ladesignal dazu genutzt werden, den Fahrzeugenergiewandler zumindest teilweise zu deaktivieren. Dadurch kann der ungünstige Betrieb des Fahrzeugenergiewandlers während des Ladebetriebs vermieden oder zumindest reduziert werden. In diesem Fall erfolgt dann die Energieversorgung über die Hilfsspule und den Niedervoltanschluss der Ladeeinrichtung. Die Hilfsspule stellt somit eine alternative Energieversorgung für das Niedervoltbordnetz während des Ladebetriebs bereit, und zwar anstelle des Fahrzeugenergiewandlers.

Besonders vorteilhaft erweist es sich, wenn zumindest ein Teil der Hauptspule und die Hilfsspule durch einen elektrischen Transformator bereitgestellt sind. Die Hauptspule kann beispielsweise vollständig durch eine Primärwicklung des Transformators gebildet sein. Die Hilfsspule kann dann zum Beispiel durch eine Sekundärwicklung des Transformators gebildet sein. Natürlich ist es auch möglich, dass die Primärwicklung, die die Hauptspule bereitstellt, lediglich einen Teil der Hauptspule bildet und ein weiterer Teil der Hauptspule eine hiervon separate Spule ist, die in Reihe mit der Primärwicklung des Transformators geschaltet ist. Dadurch kann eine von der gewünschten bereitzustellenden Leistung abhängige Kopplung auf einfache Weise realisiert werden. Es ist dadurch möglich, die Energieversorgung für das Niedervoltbordnetz an eine jeweilige erforderliche Gesamtleistung bei einem Ladevorgang eines spezifischen Kraftfahrzeugs anpassen zu können. Dadurch kann ein hohes Maß an Flexibilität hinsichtlich unterschiedlicher Kraftfahrzeuge erreicht werden.

Ferner wird vorgeschlagen, dass der Ladeeinrichtungsenergiewandler ausgebildet ist, den Ladeanschluss, den Hochvoltanschluss und/oder den Niedervoltanschluss galvanisch voneinander zu trennen. Vorzugsweise ist zumindest vorgesehen, dass der Niedervoltanschluss galvanisch vom Ladeanschluss und dem Hochvoltanschluss getrennt ist. Dies ist aus Gründen der elektrischen Sicherheit besonders vorteilhaft. Gleichwohl kann ebenfalls vorgesehen sein, dass alternativ oder ergänzend auch der Ladeanschluss und der Hochvoltanschluss voneinander galvanisch getrennt sind. Auch dies kann sich günstig auf die elektrische Sicherheit sowie auch auf die elektromagnetische Verträglichkeit auswirken. Besonders vorteilhaft ist es, wenn alle drei Anschlüsse voneinander galvanisch getrennt sind. Dies kann durch geeignete Aufbauten, beispielsweise mittels Transformatoren oder dergleichen, erreicht werden.

Gemäß einer Weiterbildung wird vorgeschlagen, dass die Hilfsspule für eine Bemessungsleistung ausgebildet ist, die an eine Gesamtleistung des Niedervoltbordnetzes während eines Ladebetriebs der Ladeeinrichtung angepasst ist. Dadurch kann die Hilfsspule an die spezifischen Erfordernisse des Niedervoltbordnetzes angepasst ausgebildet sein. Somit braucht die Hilfsspule nicht größer ausgebildet zu sein, als es für die Energieversorgung des Niedervoltbordnetzes während des bestimmungsgemäßen Ladebetriebs erforderlich ist. Die Gesamtleistung kann in diesem Betriebszustand zum Beispiel etwa 200 W betragen. Insgesamt kann dadurch ein kompakter Aufbau erreicht werden, sodass die Realisierung der Erfindung auf einfache Weise auch bei bereits vorhandenen Konstruktionen von Ladeeinrichtungen ermöglicht ist.

Ferner wird vorgeschlagen, dass die Hilfsspule über einen Hilfsgleichrichter an den Niedervoltanschluss angeschlossen ist. Diese Ausgestaltung basiert auf dem Sachverhalt, dass die Hilfsspule in der Regel eine Wechselspannung bereitstellt. Das Niedervoltbordnetz ist jedoch in der Regel ein Gleichspannungsbordnetz, ebenso wie das Hochvoltbordnetz. Um die durch die Hilfsspule bereitgestellte elektrische Energie im Niedervoltbordnetz nutzen zu können, ist deshalb vorzugsweise der Hilfsgleichrichter vorgesehen, der die Gleichrichtungsfunktion bereitstellt, sodass die von der Hilfsspule bereitgestellte elektrische Energie dem Niedervoltbordnetz zugeführt werden kann. Vorzugsweise ist der Hilfsgleichrichter von der Ladeeinrichtung umfasst. Alternativ oder ergänzend kann er jedoch auch vom Niedervoltbordnetz umfasst sein. Der Hilfsgleichrichter kann wenigstens eine Diode, insbesondere eine Halbleiterdiode, umfassen, um die Gleichrichtungsfunktionalität bereitstellen zu können. Vorzugsweise ist der Hilfsgleichrichter jedoch als Brückengleichrichter ausgebildet. Anstelle oder ergänzend zu den Dioden können natürlich auch steuerbare Halbleiterelemente, insbesondere Halbleiterschalter, beispielsweise Transistoren oder dergleichen vorgesehen sein, mittels denen die gewünschte Gleichrichtungsfunktion ebenfalls realisiert werden kann. Gegebenenfalls kann der Hilfsgleichrichter auch dazu ertüchtigt sein, eine Spannungsanpassung vorzunehmen, beispielsweise wenn die von der Hilfsspule bereitgestellte Wechselspannung nach einem reinen Gleichrichten nicht kompatibel zur Betriebsspannung des Niedervoltbordnetzes ist. Eine solche Spannungsanpassung kann zum Beispiel mittels eines integrierten DC/DC-Wandlers oder dergleichen erfolgen.

Vorteilhaft erweist es sich ferner, wenn die Induktivität als Transformator ausgebildet ist und eine Primärwicklung des Transformators zumindest teilweise die Hauptspule bildet. Diese Ausgestaltung erweist sich insofern als vorteilhaft, als dass der Ladeanschluss und der Hochvoltanschluss voneinander galvanisch getrennt werden können. Zugleich kann hierdurch auch eine Spannungsanpassung erreicht werden. Darüber hinaus kann mit dem Transformator der magnetische Fluss bereitgestellt werden, der zumindest teilweise auch die Hilfsspule zu koppeln vermag. Insofern kann die Hilfsspule eine zweite Sekundärwicklung des Transformators sein, sodass auf einfache Weise mit einem einzigen Bauteil die gewünschte Funktionalität realisiert werden kann. Dabei ist es möglich, die einzelnen Spulen beziehungsweise Wicklungen des Transformators auf individuelle Schenkel eines magnetischen Kreises beziehungsweise eines ferromagnetischen Körpers anzuordnen. Durch die Ausgestaltung der einzelnen Schenkel kann die jeweilige magnetische Kopplung und damit auch ein Energiefluss eingestellt werden. Diese Ausgestaltung ermöglicht es also, auf einfache Weise und zuverlässig die gewünschte Funktionalität zu realisieren.

Darüber hinaus kann vorgesehen sein, dass die Hauptspule über einen Hauptgleichrichter mit dem Hochvoltanschluss gekoppelt ist. Der Hauptgleichrichter kann ebenso wie der Hilfsgleichrichter hinsichtlich seiner Struktur ausgebildet sein. Besonders vorteilhaft erweist es sich dabei, dass durch den Hauptgleichrichter die Gleichrichtungsfunktion ebenfalls realisiert werden kann, sodass auch bei einer durch die Hauptspule bereitgestellten Wechselspannung eine entsprechende Gleichspannung am Hochvoltanschluss bereitgestellt werden kann. Auch hier kann der Hauptgleichrichter ergänzend noch dazu ausgelegt sein, eine Spannungsanpassung vornehmen zu können.

Die für die erfindungsgemäße Ladeeinrichtung angegebenen Vorteile und Wirkungen gelten natürlich gleichermaßen auch für das mit der erfindungsgemäßen Ladeeinrichtung ausgerüstete Kraftfahrzeug und umgekehrt.

Die Erfindung umfasst auch die Kombinationen der beschriebenen Ausführungsformen.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Ladeeinrichtung beschrieben worden sind. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: in einer schematischen Blockschaltbilddarstellung eine an einem Bordnetz eines Elektrofahrzeugs angeschlossene Ladeeinrichtung gemäß dem Stand der Technik;
- Fig. 2: in einer schematischen Blockschaltbilddarstellung eine an einem Bordnetz eines Elektrofahrzeugs angeschlossene Ladeeinrichtung gemäß der Erfindung;
- Fig. 3: in einer schematischen Blockschaltbilddarstellung einen prinzipiellen Aufbau der Ladeeinrichtung nach Fig. 1; und
- Fig .4: in einer schematischen Schaltbilddarstellung eine prinzipielle Schaltungsstruktur der Ladeeinrichtung gemäß Fig. 2.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

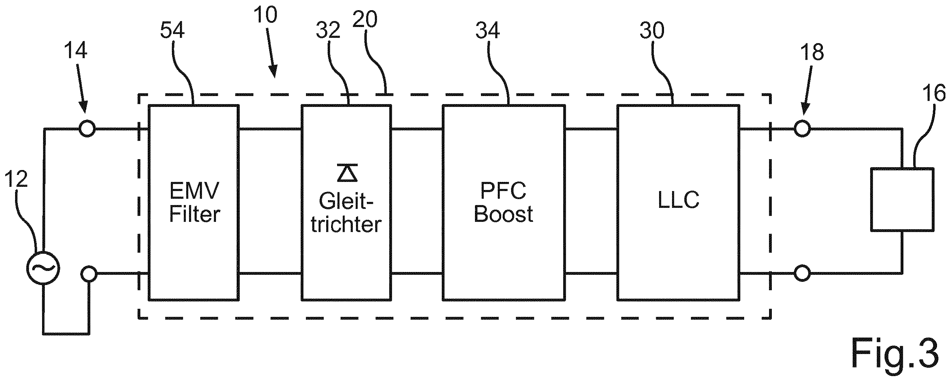

Fig. 3 zeigt in einer schematischen Blockschaltbilddarstellung einen prinzipiellen Aufbau einer Ladeeinrichtung 10, wie sie hinsichtlich der Struktur üblicherweise vorgesehen ist, wenn die Ladeeinrichtung 10 dazu ausgebildet ist, an eine kraftfahrzeugexterne Ladestation 12 angeschlossen zu werden, die eine elektrische Wechselspannung bereitstellt. Dem Grunde nach kann natürlich auch eine Gleichspannung von der Ladestation 12 bereitgestellt werden, wobei dann die Ladeeinrichtung 10 entsprechend anzupassen ist.

Die Ladeeinrichtung 10 ist für die Anordnung in einem nicht weiter dargestellten Kraftfahrzeug ausgebildet, welches vorliegend ein Elektrofahrzeug ist. Das Kraftfahrzeug kann natürlich auch ein Hybridfahrzeug oder ein anderes Kraftfahrzeug sein. Vorzugsweise ist das Kraftfahrzeug ein Kraftwagen, insbesondere ein Personenkraftwagen.

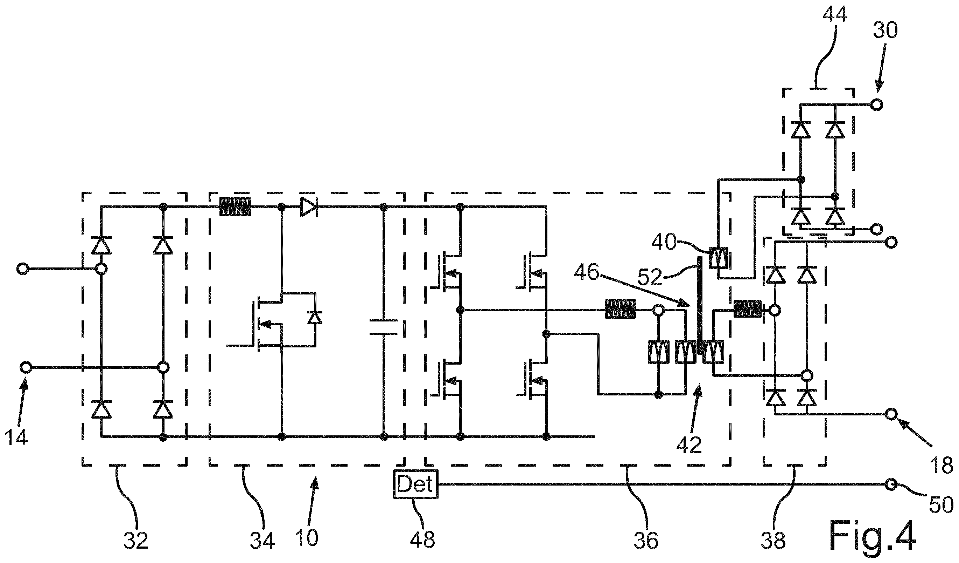

Die Ladeeinrichtung 10 umfasst danach ein EMV(elektromagnetische Verträglichkeit)-Filter 54, welches unmittelbar an den Ladeanschluss 14 angeschlossen ist. An das EMV-Filter 54 ist ein Gleichrichter 32 angeschlossen, mit dem die von der Ladestation 12 bereitgestellte Wechselspannung gleichgerichtet wird. Die gleichgerichtete Spannung wird dann einem PFC(power factor control)-Hochsetzsteller 34 zugeführt, der die von dem Gleichrichter 32 bereitgestellte Gleichspannung auf einen vorgegebenen Spannungswert erhöht. Die erhöhte Gleichspannung des PFC-Hochsetzstellers 34 wird dann einem LLC-Wandler 36 zugeführt, der eine Wechselspannung bereitstellt, die mittels eines Hauptgleichrichters 38 gleichgerichtet (Fig. 4) und an einem Hochvoltanschluss 18 bereitgestellt wird, der an ein Hochvoltbordnetz 16 des Kraftfahrzeugs angeschlossen ist.

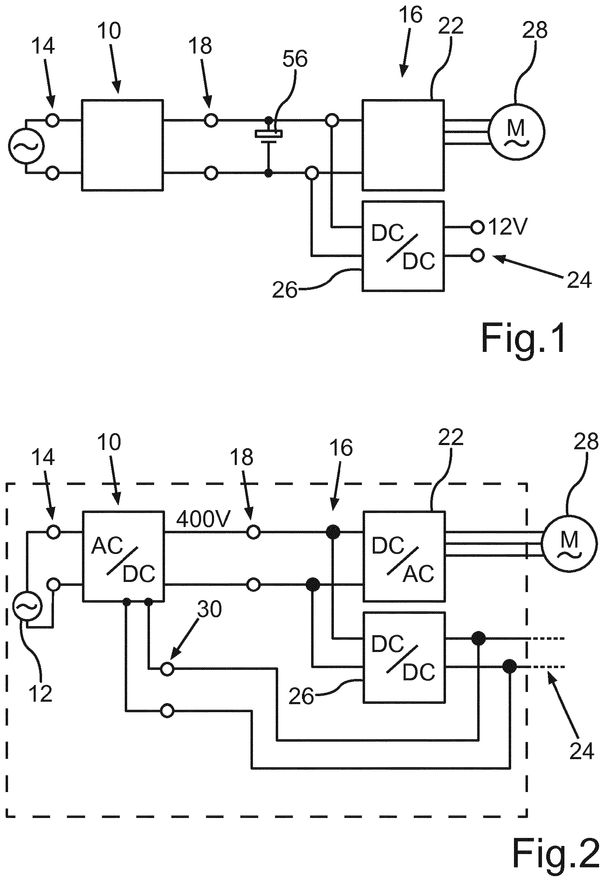

Eine vereinfachte Darstellung des Hochvoltbordnetzes 16 in Verbindung mit der Ladeeinrichtung 10 zeigt Fig. 1. Daraus ist ersichtlich, dass das Hochvoltbordnetz 16 einen elektrischen Energiespeicher nach Art einer Hochvoltbatterie 56 umfasst, an die als elektrische Antriebseinrichtung ein Wechselrichter 22 angeschlossen ist, der eine dreiphasige Wechselspannung für eine elektrische Maschine 28 bereitstellt, die dem Antrieb des Elektrofahrzeugs im bestimmungsgemäßen Fahrbetrieb dient.

Die Bemessungsspannung im bestimmungsgemäßen Betrieb des Hochvoltbordnetzes 16 beträgt vorliegend etwa 400 V. Je nach Bedarf kann die Hochvoltspannung jedoch auch abweichend hiervon gewählt sein, beispielsweise etwa 450 V oder sogar etwa 800 V betragen. Das Hochvoltbordnetz 16 sowie die Ladeeinrichtung 10 sind dann entsprechend bezüglich der elektrischen Anforderungen ausgelegt.

An das Hochvoltbordnetz 16 ist ferner ein Tiefsetzsteller 26 als Fahrzeugenergiewandler angeschlossen, der vorliegend als DC/DC-Wandler ausgebildet ist. Der Tiefsetzsteller 26 stellt eine Niedervoltgleichspannung von vorliegend etwa 12 V bereit. Hierdurch kann ein Niedervoltbordnetz 24 des Elektrofahrzeugs mit elektrischer Energie versorgt werden. Nicht dargestellt ist, dass auch das Niedervoltbordnetz 24 einen elektrischen Energiespeicher nach Art eines Akkumulators umfassen kann, der vorliegend als Blei-Säure-Akkumulator ausgebildet ist. Je nach Bedarf kann hier jedoch auch ein anderer elektrischer Energiespeicher vorgesehen sein.

Während eines Ladebetriebs ist das Elektrofahrzeug an der Ladestation 12 abgestellt. Seine Ladeeinrichtung 10 ist über den Ladeanschluss 14 und ein nicht dargestelltes lösbar mit dem Ladeanschluss 14 elektromechanisch gekoppeltes Ladekabel mit der Ladestation 12 energietechnisch gekoppelt. Dadurch kann die Ladestation 12 dem Elektrofahrzeug elektrische Energie zuführen, die zum Beispiel insbesondere zum Aufladen der Hochvoltbatterie 56 genutzt werden kann.

Während des bestimmungsgemäßen Ladebetriebs ist es in der Regel vorgesehen, dass das Niedervoltbordnetz 24 betriebsbereit gehalten wird. Der Tiefsetzsteller 26, der vorliegend zum Beispiel für eine elektrische Leistung von mehr als etwa 2 kW ausgebildet ist, wird dabei zum Beispiel mit einer Leistung von etwa 200 W, die im Niedervoltbordnetz 24 während des Ladebetriebs benötigt wird, belastet. Der Tiefsetzsteller 26 ist deshalb mit einer vergleichsweise geringen elektrischen Leistung beaufschlagt und stellt diese Leistung deshalb mit einem ungünstigen Wirkungsgrad von etwa 50 % oder sogar weniger bereit. Dies ist unerwünscht, weil unnötig Verlustleistung erzeugt wird und diese Verlustleistung für das Laden dann nicht zur Verfügung steht.

Fig. 2 zeigt eine Darstellung wie Fig. 1, bei der nunmehr die Ladeeinrichtung 10 jedoch einen Niedervoltanschluss 30 aufweist, der an das Niedervoltbordnetz 24 angeschlossen ist. Dadurch besteht die Möglichkeit, während des bestimmungsgemäßen Ladebetriebs, wie zu Fig. 1 bereits erläutert, die für das Niedervoltbordnetz 24 erforderliche elektrische Leistung nicht mehr mit dem Tiefsetzsteller 26 bereitzustellen, sondern stattdessen unmittelbar durch die Ladeeinrichtung 10. Dies erlaubt es, den Tiefsetzsteller 26 zu deaktivieren, sodass dessen ungünstiger Wandlungsbetrieb während des bestimmungsgemäßen Ladebetriebs vermieden werden kann. Die für das Niedervoltbordnetz 24 erforderliche elektrische Leistung kann somit vorzugsweise vollständig durch die Ladeeinrichtung 10 über den Niedervoltanschluss 30 unmittelbar bereitgestellt werden.

Im Folgenden sollen anhand von Fig. 4 lediglich die Unterschiede der Ladeeinrichtung 10 gemäß der Erfindung erläutert werden. Für die weitergehenden Funktionalitäten wird auf die vorhergehenden Ausführungen insbesondere zu den Fig. 1 und 3 verwiesen.

Fig. 4 zeigt nun eine Möglichkeit zur Realisierung der Erfindung gemäß Fig. 2. Zu erkennen ist, dass die Ladeeinrichtung 10 - wie zuvor bereits erläutert - den Ladeanschluss 14 sowie den Hochvoltanschluss 18 umfasst. Ebenfalls ist vorliegend vorgesehen, dass die Ladeeinrichtung 10 das EMV-Filter 54, den Gleichrichter 32, den PFC-Hochsetzsteller 34, den LLC-Wandler 36 sowie den Hauptgleichrichter 38 umfasst, die zusammen den Ladeeinrichtungsenergiewandler 20 bilden. Zu erkennen ist anhand von Fig. 4 ferner, dass der LLC-Wandler 36 einen Transformator 46 umfasst, der vorliegend zwei über ein ferromagnetisches Joch 52 magnetisch gekoppelte Spulen umfasst, wobei eine Primärspule des Transformators 46 einen Teil einer Hauptspule 42 bildet. Eine Sekundärspule, die über das Joch 52 magnetisch mit der Primärspule gekoppelt ist, stellt eine gewandelte Wechselspannung zur Verfügung, die mittels des an die Sekundärspule angeschlossenen Hauptgleichrichters 38 gleichgerichtet wird, sodass am an den Hauptgleichrichter 38 angeschlossenen Hochvoltanschluss 18 die entsprechende Hochvoltgleichspannung bereitgestellt wird.

Mit dem Joch 52 ist ferner eine Hilfsspule 40 magnetisch gekoppelt, die hinsichtlich ihrer Eigenschaften derart bemessen ist, dass sie das Niedervoltbordnetz 24 mit elektrischer Energie versorgen kann. Um energieungünstige Wandlungen weitgehend einsparen zu können, ist vorgesehen, dass die Hilfsspule 40 eine Wechselspannung bereitstellt, die mittels eines an die Hilfsspule 40 angeschlossenen Hilfsgleichrichters 44 gleichgerichtet und am Niedervoltanschluss 30 für das Niedervoltbordnetz 24 bereitgestellt wird. Eine Spanungswandlung kann somit weitgehend vermieden werden. Dadurch kann mit einem hohen Wirkungsgrad die während des bestimmungsgemäßen Ladebetriebs erforderliche Gesamtleistung des Niedervoltbordnetzes 24 durch die Ladeeinrichtung 10 ergänzend beziehungsweise alternativ bereitgestellt werden, sodass der Tiefsetzsteller 26 während des bestimmungsgemäßen Ladebetriebs sogar deaktiviert werden kann. Dadurch können die durch den Tiefsetzsteller 26 im Stand der Technik auftretende hohe Verlustleistung nahezu vollständig vermieden werden.

Um den Tiefsetzsteller 26 zu steuern, umfasst die Ladeeinrichtung 10 eine Detektoreinheit 48, mittels der die energietechnische Kopplung der Ladeeinrichtung mit der Ladestation 12 ermittelt werden kann. Zu diesem Zweck kann zum Beispiel ein Spannungssensor vorgesehen sein, der eine von der Ladestation 12 bereitgestellte elektrische Spannung erfasst. Abhängig von der erfassten Spannung stellt die Detektoreinheit 48 ein Ladesignal bereit, mittels dem der Tiefsetzsteller 26 gesteuert werden kann. Vorliegend ist vorgesehen, dass der Tiefsetzsteller 26 deaktiviert wird, sobald die elektrische Spannung der Ladestation 12 erfasst wird.

In den Ausführungsbeispielen ist vorliegend ferner vorgesehen, dass die Gleichrichter 32, 38, 44 mit Dioden bestückt sind, um die gewünschte Gleichrichterfunktion bereitstellen zu können. Alternativ oder ergänzend können hier auch steuerbare Halbleiter vorgesehen sein, beispielsweise Transistoren, Thyristoren und/oder dergleichen, um eine verbesserte Einwirkungsmöglichkeit auf die Funktion des Gleichrichtens erreichen zu können. Darüber hinaus ermöglichen solche Ausgestaltungen auch eine gegebenenfalls teilweise Spannungsanpassung, sofern dies sich als erforderlich erweisen sollte. Zu diesem Zweck können weitere passive elektrische Energiespeicher wie Induktivitäten und/oder Kondensatoren mit den jeweiligen Gleichrichtern gekoppelt sein.

Der Transformator 46 kann ein zentrales ferromagnetisches Joch 52 aufweisen, sodass die Wicklungen, insbesondere die Hauptspule 42 und die Hilfsspule 40 konzentrisch übereinander gewickelt angeordnet sein können. Es kann in alternativen Ausgestaltungen natürlich auch vorgesehen sein, dass für eine oder mehrere der Wicklungen ein separates ferromagnetisches Joch vorgesehen ist, welches mit dem jeweiligen anderen ferromagnetischen Joch entsprechend magnetisch gekoppelt sein kann. Das ferromagnetische Joch ist vorliegend vorzugsweise aus einem ferromagnetischen Werkstoff wie einem Ferrit oder dergleichen gebildet, welches sich insbesondere für einen Betrieb bei hohen Frequenzen im Bereich von größer als 1 kHz eignet. Eine Betriebsfrequenz des Ladeeinrichtungsenergiewandlers 20 kann zum Beispiel bei etwa 100 kHz, 500 kHz oder sogar 1 MHz liegen.

Insgesamt zeigen die Beispiele, wie durch die Erfindung während des bestimmungsgemäßen Ladebetriebs eine effektive Energieversorgung des Niedervoltbordnetzes 24 erreicht werden kann. Die Ausführungsbeispiele sind jedoch nicht beschränkend für die Erfindung und sollen diese lediglich erläutern.

## Patentansprüche

1. System bestehend aus einer Ladeeinrichtung (10) und einem Fahrzeugenergiewandler (26) für ein Kraftfahrzeug, mit einem Ladeanschluss (14) zum leitungsgebundenen energietechnischen Koppeln mit einer kraftfahrzeugexternen Ladestation (12), einem Hochvoltanschluss (18) zum elektrischen Anschließen der Ladeeinrichtung (10) an ein Hochvoltbordnetz (16) des Kraftfahrzeugs und einem mit dem Ladeanschluss (14) und dem Hochvoltanschluss (18) elektrisch gekoppelten Ladeeinrichtungsenergiewandler (20), wobei der Ladeeinrichtungsenergiewandler (20) zum Wandeln von elektrischer Energie zwischen dem Ladeanschluss (14) und dem Hochvoltanschluss (18) eine elektrische Induktivität als elektrischen Energiespeicher aufweist, die zumindest teilweise als elektronische Hauptspule (42) ausgebildet ist, wobei die Ladeeinrichtung (10) einen Niedervoltanschluss (30) zum Anschließen an ein Niedervoltbordnetz (24) des Kraftfahrzeugs sowie eine elektronische Hilfsspule (40) aufweist, die magnetisch mit der Hauptspule (42) und elektrisch mit dem Niedervoltanschluss (30) gekoppelt ist und die ausgebildet ist, elektrische Energie für das Niedervoltbordnetz (24) bereitzustellen, wobei das Hochvoltbordnetz (16) und das Niedervoltbordnetz (24) im bestimmungsgemäßen Betrieb des Kraftfahrzeugs mittels des Fahrzeugenergiewandlers (26) energietechnisch gekoppelt sind, um elektrische Energie des Hochvoltbordnetzes (16) für das Niedervoltbordnetz (24) bereitzustellen, und die Hilfsspule (40) derart ausgelegt ist, dass sie die erforderliche Leistung des Niedervoltbordnetzes (24) während des Ladebetriebs bereitzustellen vermag, **dadurch gekennzeichnet, dass** die Hilfsspule (40) dem Niedervoltbordnetz (24) während des Ladebetriebs die elektrische Spannung bereits in einer derart angepassten Größe bereitstellt, dass sie ohne weitere Transformation für das Niedervoltbordnetz nutzbar ist, wobei die Ladeeinrichtung (10) eine Detektoreinheit (48) aufweist, die ausgebildet ist, das energietechnische Koppeln der Ladeeinrichtung (10) mit der Ladestation (12) zu detektieren und ein entsprechendes Ladesignal abzugeben, um den Fahrzeugenergiewandler (26) zu deaktivieren, sodass die Energieversorgung über die Hilfsspule (40) und den Niedervoltanschluss (30) der Ladeeinrichtung (10) erfolgt.

2. System nach Anspruch 1,
**dadurch gekennzeichnet, dass**
zumindest ein Teil der Hauptspule (42) und die Hilfsspule (40) durch einen elektrischen Transformator (46) bereitgestellt sind.

3. System nach einem der vorhergehenden Ansprüche,
**dadurch gekennzeichnet, dass**
der Ladeeinrichtungsenergiewandler (20) ausgebildet ist, den Ladeanschluss (14), den Hochvoltanschluss (18) und/oder den Niedervoltanschluss (30) galvanisch voneinander zu trennen.

4. System nach einem der vorhergehenden Ansprüche,
**dadurch gekennzeichnet, dass**
die Hilfsspule (40) für eine Bemessungsleistung ausgebildet ist, die an eine Gesamtleistung des Niedervoltbordnetzes (24) während eines Ladebetriebs der Ladeeinrichtung (10) angepasst ist.

5. System nach einem der vorhergehenden Ansprüche,
**dadurch gekennzeichnet, dass**
die Hilfsspule (40) über einen Hilfsgleichrichter (44) an den Niedervoltanschluss (30) angeschlossen ist.

6. System nach einem der vorhergehenden Ansprüche,
**dadurch gekennzeichnet, dass**
die Induktivität als Transformator (46) ausgebildet ist und eine Primärwicklung des Transformators (46) zumindest teilweise die Hauptspule (42) bildet.

7. System nach einem der vorhergehenden Ansprüche,
**dadurch gekennzeichnet, dass**
die Hauptspule (42) über einen Hauptgleichrichter (38) mit dem Hochvoltanschluss (18) gekoppelt ist.

8. Kraftfahrzeug mit einem Hochvoltbordnetz (16), einem Niedervoltbordnetz (24), einer Ladeeinrichtung (10), die einen an das Hochvoltbordnetz (16) angeschlossenen Hochvoltanschluss (18) und einen Ladeanschluss (14) zum energietechnischen Koppeln mit einer kraftfahrzeugexternen Ladestation (12) aufweist, sowie einen zwischen dem Hochvoltbordnetz (16) und dem Niedervoltbordnetz (24) angeschlossenen Fahrzeugenergiewandler (26) zum elektrischen Koppeln des Hochvoltbordnetzes (16) und des Niedervoltbordnetzes (24),
**dadurch gekennzeichnet, dass**
die Ladeeinrichtung (10) und der Fahrzeugenergiewandler (26) ein System definieren, dass nach einem der vorhergehenden Ansprüche ausgebildet ist und einen an das Niedervoltbordnetz (24) angeschlossenen Niedervoltanschluss (30) aufweist.

## Claims

1. System consisting of a charging device (10) and a vehicle energy converter (26) for a motor vehicle, having a charging connection (14) for line-connected energetic coupling to a motor vehicle-external charging station (12), a high-voltage connection (18) for electrically connecting the charging device (10) to a high-voltage on-board power supply (16) of the motor vehicle and a charging device energy converter (20) electrically coupled to the charging connection (14) and the high-voltage connection (18), wherein the charging device energy converter (20) for converting electrical energy between the charging connection (14) and the high-voltage connection (18) has an electrical inductance as an electrical energy store, which is at least partially designed as an electronic main coil (42), wherein the charging device (10) has a low-voltage connection (30) for connecting to a low-voltage on-board power supply (24) of the motor vehicle as well as an electronic auxiliary coil (40) which is coupled magnetically to the main coil (42) and electrically to the low-voltage connection (30) and which is configured to provide electrical energy for the low-voltage on-board power supply (24), wherein, during proper operation of the motor vehicle, the high-voltage on-board power supply (16) and the low-voltage on-board power supply (24) are coupled energetically by means of the vehicle energy converter (26) in order to provide electrical energy from the high-voltage on-board power supply (16) for the low-voltage on-board power supply (24) and the auxiliary coil (40) is configured to be able to provide the required power for the low-voltage on-board power supply (24) during the charging operation, **characterised in that**, during the charging operation, the auxiliary coil (40) already provides the low-voltage on-board power supply (24) with the electrical voltage in a magnitude which is adapted such that it can be used by the low-voltage on-board power supply without further transformation, wherein the charging device (10) has a detecting unit (48) which is configured to detect the energetic coupling of the charging device (10) to the charging station (12) and to output a corresponding charging signal in order to deactivate the vehicle energy converter (26), such that the energy supply is carried out via the auxiliary coil (40) and the low-voltage connection (30) of the charging device (10).

2. System according to claim 1,
**characterised in that**
at least a part of the main coil (42), and the auxiliary coil (40), are provided by an electrical transformer (46).

3. System according to any of the preceding claims,
**characterised in that**
the charging device energy converter (20) is configured to separate the charging connection (14), the high-voltage connection (18) and/or the low-voltage connection (30) galvanically from one another.

4. System according to any of the preceding claims,
**characterised in that**
the auxiliary coil (40) is configured for a rated capacity which is adapted to a total capacity of the low-voltage on-board power supply (24) during a charging operation of the charging device (10).

5. System according to any of the preceding claims,
**characterised in that**
the auxiliary coil (40) is connected to the low-voltage connection (30) via an auxiliary rectifier (44).

6. System according to any of the preceding claims,
**characterised in that**
the inductance is configured as a transformer (46) and a primary winding of the transformer (46) at least partially forms the main coil (42).

7. System according to any of the preceding claims,
**characterised in that**
the main coil (42) is coupled to the high-voltage connection (18) via a main rectifier (38).

8. Motor vehicle having a high-voltage on-board power supply (16), a low-voltage on-board power supply (24), a charging device (10) which has a high-voltage connection (18) connected to the high-voltage on-board power supply (16) and a charging connection (14) for the energetic coupling to a motor vehicle-external charging station (12), as well as a vehicle energy converter (26), connected between the high-voltage on-board power supply (16) and the low-voltage on-board power supply (24) for the electrical coupling of the high-voltage on-board power supply (16) and the low-voltage on-board power supply (24),
**characterised in that**
the charging device (10) and the vehicle energy converter (26) define a system which is configured according to any of the preceding claims and has a low-voltage connection (30) connected to the low-voltage on-board power supply (24).

## Revendications

1. Système composé d'un dispositif de recharge (10) et d'un convertisseur d'énergie de véhicule (26) pour un véhicule automobile, avec une borne de recharge (14) pour un couplage énergétique filaire à une station de recharge (12) extérieure au véhicule automobile, une borne haute tension (18) pour connecter électriquement le dispositif de recharge (10) à un réseau de bord haute tension (16) du véhicule automobile et un convertisseur d'énergie de dispositif de recharge (20) couplé électriquement avec la borne de recharge (14) et la borne haute tension (18), dans lequel le convertisseur d'énergie de dispositif de recharge (20) pour convertir l'énergie électrique entre la borne de recharge (14) et la borne haute tension (18) présente une inductance électrique en tant qu'accumulateur d'énergie électrique, qui est au moins partiellement conçue sous la forme d'une bobine principale électronique (42), dans lequel le dispositif de recharge (10) présente une borne basse tension (30) pour connexion à un réseau de bord basse tension (24) du véhicule automobile et une bobine auxiliaire électronique (40) qui est couplée magnétiquement à la bobine principale (42) et couplée électriquement à la borne basse tension (30) et qui est conçue pour fournir de l'énergie électrique au réseau électrique basse tension (24), dans lequel le réseau électrique haute tension (16) et le réseau électrique basse tension (24) sont énergétiquement-techniquement couplés lorsque le véhicule automobile est actionné comme prévu au moyen du convertisseur d'énergie de véhicule (26) afin de fournir de l'énergie électrique du réseau de bord haute tension (16) pour au réseau de bord basse tension (24), et la bobine auxiliaire (40) est conçue de manière à pouvoir fournir la puissance requise du réseau de bord basse tension (24) pendant la charge, **caractérisé en ce que** la bobine auxiliaire (40) fournit déjà au réseau de bord basse tension (24) la tension électrique pendant la recharge dans une taille adaptée telle qu'elle peut être utilisée pour le réseau de bord basse tension sans transformation supplémentaire, dans lequel le dispositif de recharge (10) présente une unité de détection (48) qui est conçue pour détecter le couplage énergétique du dispositif de recharge (10) à la station de recharge (12) et pour émettre un signal de recharge correspondant afin de désactiver le convertisseur d'énergie de véhicule (26) ainsi que l'alimentation en énergie via la bobine auxiliaire (40) et la borne basse tension (30) du dispositif de recharge (10).

2. Système selon la revendication 1,
**caractérisé en ce que**
au moins une partie de la bobine principale (42) et la bobine auxiliaire (40) sont fournies par un transformateur électrique (46).

3. Système selon l'une quelconque des revendications précédentes,
**caractérisé en ce que**
le convertisseur d'énergie de dispositif de recharge (20) est conçu pour isoler électriquement la borne de recharge (14), la borne haute tension (18) et/ou la borne basse tension (30) les unes des autres.

4. Système selon l'une quelconque des revendications précédentes,
**caractérisé en ce que**
la bobine auxiliaire (40) est conçue pour une puissance nominale qui est adaptée à une puissance totale du réseau de bord basse tension (24) pendant un fonctionnement de recharge du dispositif de recharge (10).

5. Système selon l'une quelconque des revendications précédentes,
**caractérisé en ce que**
la bobine auxiliaire (40) est connectée à la borne basse tension (30) par l'intermédiaire d'un redresseur auxiliaire (44).

6. Système selon l'une quelconque des revendications précédentes,
**caractérisé en ce que**
l'inductance est conçue comme un transformateur (46) et un enroulement primaire du transformateur (46) forme au moins partiellement la bobine principale (42).

7. Système selon l'une quelconque des revendications précédentes,
**caractérisé en ce que**
la bobine principale (42) est couplée à la borne haute tension (18) par l'intermédiaire d'un redresseur principal (38).

8. Véhicule automobile avec un réseau de bord haute tension (16), un réseau de bord basse tension (24), un dispositif de recharge (10) qui présente une borne haute tension (18) connectée au réseau de bord haute tension (16) et une borne de recharge (14) pour un couplage énergétique à une station de recharge (12) extérieure au véhicule, et un convertisseur d'énergie de véhicule (26) connecté entre le réseau de bord haute tension (16) et le réseau de bord basse tension (24) pour coupler électriquement le réseau de bord haute tension (16) et le réseau de bord basse tension (24),
**caractérisé en ce que**
le dispositif de recharge (10) et le convertisseur d'énergie de véhicule (26) définissent un système défini selon l'une quelconque des revendications précédentes et présente une borne basse tension (30) connectée au réseau de bord basse tension (24).
